# EUROPEAN PATENT APPLICATION

(11) **EP 4 428 632 A1**
(43) Date of publication of application: **11.09.2024**
(21) Application number: 22888995.2
(22) Date of filing: 14.09.2022
(51) Int. Cl.: G05B 9/03, G05D 1/02

(54) **AUTONOMOUS DRIVING CONTROL SYSTEM AND VEHICLE**

(30) Priority: 04.11.2021 CN 202111301098
(71) Applicant: Ningbo Lotus Robotics Co., Ltd., Ningbo, Zhejiang 315335 (CN)
(72) Inventor: PAN, Jianwei, Wuhan, Hubei 430056 (CN); LI, Bo, Wuhan, Hubei 430056 (CN); LI, Qianqian, Wuhan, Hubei 430056 (CN)
(74) Representative: Zaboliene, Reda
(86) International application number: PCT/CN2022/118693
(87) International publication number: WO 2023/077967

(57) **Abstract**

An autonomous driving control system and a vehicle. The system comprises a first sensor assembly, a second sensor assembly, a main control device, a standby control device, and an execution device; the first sensor assembly and the second sensor assembly are both used for collecting environment information around a vehicle, and transmitting the collected environment information to the main control device and the standby control device which are connected to the first sensor assembly and the second sensor assembly; the main control device and the standby control device are both connected to the execution device, the main control device is connected to the standby control device, the main control device and the standby control device detect working states of one another, and the main control device is used for generating a corresponding control instruction according to the received environment information; the standby control device is used for generating a corresponding control instruction according to the received environment information and transmitting the control instruction to the execution device when the working state of the main control device represents a fault. According to the system and the vehicle, the accuracy of environment information acquisition is ensured, and the accuracy of control instruction generation is improved.

## Description

### TECHNICAL FIELD

The present invention relates to the technical field of autonomous driving, in particular to an autonomous driving control system and a vehicle.

### BACKGROUND

Cars are developing in four areas: automation, networking, electrification and sharing, of which autonomous driving technology is the top priority in the development of the current automotive industry, which not only has a huge impact on the development of the industry, but also leads the major changes in the future travel mode.

In order to further realize the highly automated driving system at L3 and L4 levels in the future, it is necessary to comprehensively improve the reliability of the system, and put forward higher requirements for the perception, decision-making, execution system, software equipment and hardware equipment. Among them, the standby redundancy of the controller and the execution device is indispensable to achieve a high degree of autonomous driving.

L3 and L4 highly automated driving need to perform driving tasks with higher reliability, so as to free the driver from driving tasks and provide the driver with Eyes-Off and mind-off driving experience. In order to achieve such a high reliability system, it is necessary for the controller and the execution device to achieve ASILD level of functional safety and reliability. In order to achieve such a high-reliability system, both the controller and the execution device are required to achieve functional safety and reliability of ASIL D level. The existing redundant control system for autonomous driving includes main control device, standby control device, steering redundant control system, braking redundant control system. The main controller and standby controller exchange information. The standby controller sends standby control commands to the steering redundant control system and the braking redundant control system to achieve driving degradation and safe stopping. However, in the prior art, the main control device and the standby controller are only connected to the same forward sensor. On the one hand, the sensing signal cannot be redundant, and on the other hand, the standby controller cannot be fully redundant with the main control, so it cannot meet the reliability requirements of high-level autonomous driving.

### SUMMARY

In order to solve the above technical problems, the specific technical solutions of this application are as follows:
on the one hand, this application provides an autonomous driving control system, which includes a first sensor assembly, a second sensor assembly, a main control device, a standby control device and an execution device;
both the first sensor assembly and the second sensor assembly is configured to collect environmental information around a vehicle, and transmit collected environmental information to the main control device and the standby control device which are connected to the first sensor assembly and the second sensor assembly;
both the main control device and the standby control device are connected to the execution device, the main control device is connected to the standby control device, the main control device and the standby control device detect each other's working status, and the main control device is configured to generate a corresponding control command, and transmit a control command to the executive device, the control command is configured to control the vehicle;
the standby control device is configured to generate the corresponding control command according to a received environmental information and transmit the control command to the execution device when the working state of the main control device represents a failure.

Further, the main control device includes a main sensing component and a main decision-making component, the standby control device includes a standby sensing component and a standby decision-making component;
the main sensing component is configured to establish an environment model according to the environment information;
the standby sensing component is configured to establish the environmental model based on the environmental information when the working state of the main sensing component represents a fault;
the main decision-making component is configured to generate the corresponding control command according to the environment model and transmit the control command to the execution device which is connected to the main decision-making component;
the standby decision-making component is configured to generate the corresponding control command according to the environment model and transmit the control command to the execution device which is connected to the standby decision-making component, when the working state of the main decision-making component represents a fault.

Further, the main sensing component is connected to the standby sensing component, and the main sensing component and the standby sensing component detect each other's working status;
the main decision-making component and the standby decision-making component are connected, and the main decision-making component and the standby decision-making component detect each other's working status.

Further, the main decision-making component includes: a main prediction module, a main planning module and a main control module, and the standby decision-making component includes: a standby prediction module, a standby planning module and a standby control module;
the main prediction module is configured to predict a trajectory of an obstacle in the environment information according to the environment model;
the standby prediction module is configured to predict the trajectory of the obstacle in the environment information according to the environment model when the main prediction module fails;
the main planning module is configured to plan the traveling speed and traveling angle of the current vehicle based on the trajectory of the obstacle, and transmit the traveling speed and traveling angle to the main control module and/or the standby control module;
the standby planning module is configured to plan a traveling speed and a traveling angle of a current vehicle based on the trajectory of the obstacle when the main planning module fails, and transmit the traveling speed and traveling angle to the main control module and/or the standby control module;
the main control module is configured to generate the control command according to the traveling speed and traveling angle and transmit the control command to the connected execution device;
the standby control module is configured to generate the control command according to the traveling speed and traveling angle and transmit the control command to the execution device when the main control module fails.

Further, the main prediction module is connected to the standby prediction module, and the main prediction module and the standby prediction module detect each other's working status;
the main planning module is connected to the standby planning module, and the main planning module and the standby planning module detect each other's working status;
the main control module is connected to the standby control module, and the main control module and the standby control module detect each other's working status.

Further, the main control device includes a first health monitoring component, and the standby control device includes a second health monitoring component;
the first health monitoring component is respectively connected with the standby sensing component and the standby decision-making component, and the first health monitoring component is configured to detect the working status of the standby sensing component and the standby decision-making component;
the second health monitoring component is respectively connected with the main sensing component and the main decision-making component, and the second health monitoring component is configured to detect the working status of the main sensing component and the main decision-making component.

Further, the first health monitoring component is also connected to the standby prediction module, the standby planning module and the standby control module; the first health monitoring component is also configured to detect the working status of the standby prediction module, the standby planning module and the standby control module;
the second health monitoring component is also connected with the main prediction module, the main planning module and the main control module; the second health monitoring component is also configured to detect the working status of the main prediction module, the main planning module and the main control module.

Further, the main control device includes a first health monitoring component, and the standby control device includes a second health monitoring component;
both the first health monitoring component and the second health monitoring component are connected to the main sensing component, the main decision-making component, the standby sensing component, and the standby decision-making component, and both the first health monitoring component and the second health monitoring component are configured to detect the working status of the main sensing component, the main decision-making component, the standby sensing component, and the standby decision-making component.

Further, the first health monitoring component and the second health monitoring component are also connected to the main prediction module, the main planning module, the main control module, the standby prediction module, the standby planning module and the standby control module; the first health monitoring component and the second health monitoring component are also configured to detect the working status of the main prediction module, the main planning module, the main control module, the standby prediction module, the standby planning module and the standby control module.

On the other hand, this application provides a vehicle, the vehicle is provided with an autonomous driving system, and the autonomous driving system includes the autonomous driving control system as described above.

Using the above technical scheme, the autonomous driving control system and vehicle in this application include: a first sensor assembly, a second sensor assembly, a main control device, a standby control device and an executive device;
the first sensor assembly and the second sensor assembly configured to collect environmental information around the vehicle and transmit the collected environmental information to the connected main control device and the standby control device. The first sensor assembly and the second sensor assembly are configured to collect environmental information around the vehicle and transmit the collected environmental information to the connected control device. Thus, the environmental information collected by the first sensor assembly and the second sensor assembly can be backed up and the accuracy of the obtained environmental information can be ensured. The main control device can also generate the corresponding control command according to the environmental information collected by the above two sensor assembly to improve the generation accuracy of the control command, and avoid inaccurate control caused by the errors of the environmental information collected by a single sensor assembly, and achieve functional safety and reliability of ASIL D level of autonomous driving;
in addition, when a component of the main control device is abnormal, the other the main control device can still generate the control command with the standby component of the standby control device, so as to avoid the situation that all components of all main control devices need to switch to the standby control device when a component of the main control device fails, thus ensuring the timeliness and accuracy of standby. It further ensures the functional safety and reliability of ASIL D level of autonomous driving.

In order to make the above and other purposes, characteristics and advantages of this application more obvious and understandable, the following is a better embodiment, and in accordance with the attached diagram, described in detail below.

### BRIEF DESCRIPTION OF THE DRAWINGS

In order to more clearly illustrate the technical scheme in the present embodiment or prior art, the following is a brief introduction of the drawings required to be used in the description of the embodiment or prior art. It is obvious that the drawings in the following description are only some embodiments of the present application. For ordinary skilled personnel in the field, without creative labor, it is necessary to make a brief introduction. Other drawings can also be obtained from these drawings.
FIG. 1 shows a schematic structural diagram of an autonomous driving control system provided in an embodiment of this application;
FIG.2 shows a schematic structural view of a main control device and a standby control device provided in the embodiments herein;
FIG.3 shows a schematic structural view of the other main control device and the other standby control device provided in the embodiments herein;
FIG.4 shows a schematic structural diagram of another main control device and another standby control device provided in the embodiments herein.

### DETAILED DESCRIPTION OF PREFERRED EMBODIMENTSDETAILED

The following will clearly and completely describe the technical solutions in the embodiments of this application in conjunction with the accompanying drawings in the embodiments of this application. Obviously, the described embodiments are only some of the embodiments of this application, not all of them. Based on the embodiments herein, all other embodiments obtained by persons of ordinary skill in the art without making creative efforts fall within the scope of protection herein.

It should be noted that the terms "first" and "second" in the description and Claims herein and the above drawings are configured to distinguish similar objects, and not necessarily configured to describe a specific sequence or sequence. It is to be understood that the data so used are interchangeable under appropriate circumstances such that the embodiments herein described herein can be practiced in sequences other than those illustrated or described herein. Furthermore, the terms "comprising" and "having", as well as any variations thereof, are intended to cover a non-exclusive inclusion, for example, a process, method, means, product or equipment comprising a sequence of steps or elements need not be limited to the expressly listed instead, may include other steps or units not explicitly listed or inherent to the process, method, product or apparatus.

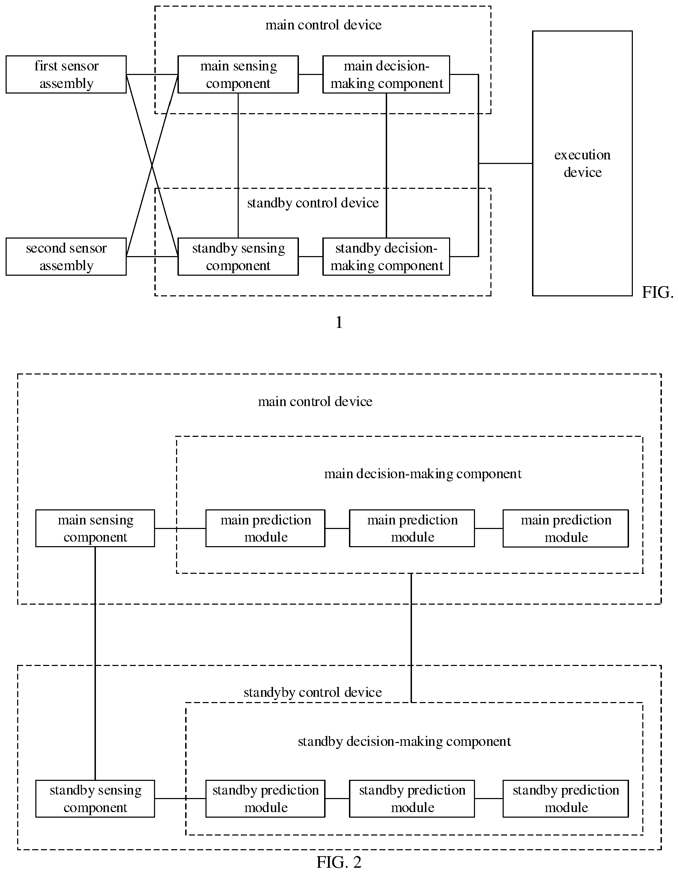

In order to solve the above problems, the embodiment of this application provides an autonomous driving control system, please refer to FIG.l, FIG.1 shows a schematic structural diagram of the autonomous driving control system provided in this embodiment, the system includes: a first sensor assembly, the second sensor assembly, a main control device, a standby control device and an execution device;
both the first sensor assembly and the second sensor assembly is configured to collect environmental information around a vehicle, and transmit the collected environmental information to the connected main control device and standby control device;
both the main control device and the standby control device are connected to the execution device, the main control device is connected to the standby control device, the main control device and the standby control device detect each other's working status, and the main control device is configured to generate a corresponding control command, and transmit the control command to the executive device, the control command is configured to control the vehicle;
the standby control device is configured to generate corresponding control command according to the received environmental information and transmit the control command to the execution device when the working state of the main control device represents a failure.

Specifically, the first sensor assembly and the second sensor assembly can be laser light radars or image sensors, which are configured to collect the environmental information around the vehicle, and the environmental information is configured to represent the type of an obstacle and the distance between the vehicle and the corresponding obstacle, wherein the type of the obstacle can be moving obstacle as well as fixed obstacle.

The environmental information collected by the first sensor assembly can be transmitted to the main control device and the standby control device through wired transmission, and the environmental information collected by the second sensor assembly can also be transmitted to the main control device and the standby control device through wired transmission. The main control device and the standby control device can generate corresponding control command according to the received environmental information and the current state information of the vehicle.

Specifically, the execution device can control operations such as deceleration, braking and/or steering of the vehicle according to the received control command.

Specifically, the execution device may include a main steering assembly, a standby steering component, a main braking component, and a standby braking component. When the control system is all normal, the main steering component and the main braking component are configured to complete steering avoidance and/or braking. When the main steering component is faulty, the standby steering component and the main braking component are configured to accomplish the steering avoidance and/or braking. When the main braking component is faulty, the main steering component and the standby braking component are configured to accomplish the steering avoidance and/or braking.

In practical applications, the main control device and the standby control device are often equipped with multiple components to generate control command based on environmental information and status information of the current vehicle.

On the basis of the above embodiments, in one embodiment of this specification, the main control device includes a main sensing component and a main decision-making component, and the standby control device includes a standby sensing component and a standby decision-making component;
the main sensing component is configured to establish an environment model according to the environment information;
the standby sensing component is configured to establish the environmental model based on the environmental information when the working state of the main sensing component represents a fault;
the main decision-making component is configured to generate corresponding control command according to the environment model and transmit the control command to the connected execution device;
the standby decision-making component is configured to generate corresponding control command according to the environment model and transmit the control command to the connected execution device when the working state of the main decision-making component represents a fault.

Specifically, the main sensing component and the standby sensing component can determine and establish an environment model according to the environmental information (image or radar) collected by the sensor component and the obtained state information of the current vehicle. Wherein, the state information of the current vehicle may include the speed, driving angle, etc. of the vehicle. The environment model may include drivable routes around the vehicle, distance of the obstacle, the categories of the obstacle, and the like. The environment model can be understood as a stitched look-around image.

Specifically, the main decision-making component and the standby decision-making component can generate corresponding control command according to the environment model and transmit the control command to the connected execution device, wherein the control command represents the vehicle's travel route and the corresponding traveling angle to generate a corresponding control command. It can be understood that, the control command corresponds to each coordinate point on the travel route, that is, different travel positions can correspond to the same or different control commands, and the control commands can be configured to avoid collisions, that is, the control command can be a set of instructions, each instruction in the command set can correspond to a trajectory point and the corresponding driving speed of the trajectory point.

In an optional embodiment, the main sensing component is connected to the standby sensing component, and the main sensing component and the standby sensing component detect each other's working status;
the main decision-making component and the standby decision-making component are connected, and the main decision-making component and the standby decision-making component detect each other's working status.

Specifically, the autonomous driving control system provided by the embodiment of this specification can use the main decision-making component and the standby decision-making component to detect each other's working status, and the working status can be normal or faulty. That is, when the main decision-making component fails, the standby decision-making component can know in time to replace the main decision-making component to complete the steps of generating corresponding control command according to the environment model and transmitting the control command to the connected execution device.

On the basis of the above-mentioned embodiments, in one embodiment of this specification, FIG.2 shows a schematic structural diagram of a main control device and a standby control device provided in the embodiments of this application, please refer to FIG.2, the main decision-making component include: a main prediction module, a main planning module and a main control module, and the standby decision-making component include: a standby prediction module, a standby planning module and a standby control module;
the main prediction module is configured to predict the trajectory of the obstacle in the environment information according to the environment model;
the standby prediction module is configured to predict the trajectory of the obstacle in the environment information according to the environment model when the main prediction module fails;
the main planning module is configured to plan the traveling speed and traveling angle of the current vehicle based on the trajectory of the obstacle, and transmit the traveling speed and traveling angle to the main control module and/or the standby control module;
the standby planning module is configured to plan the traveling speed and traveling angle of the current vehicle based on the trajectory of the obstacle when the main planning module fails, and transmit the traveling speed and traveling angle to the main control module and/or the standby control module;
the main control module is configured to generate the control command according to the traveling speed and traveling angle and transmit the control command to the connected execution device;
the standby control module is configured to generate control command according to the traveling speed and traveling angle and transmit the control command to the connected execution device when the main control module fails.

Specifically, the main prediction module can be connected with the standby prediction module, the standby prediction module can be configured to detect the working status of the main prediction module, the main planning module can be connected with the standby planning module, and the connection of the standby planning module can be configured to detect the working status of the main planning module state. The main control module can be connected with the standby control module, and the standby control module can be configured to detect the working state of the main control module. That is, the control system can detect the corresponding components in the main control device through the components in the standby control device. The working status of each component detected by the control system may include module identification information and/or fault situation information, so that when a component in the main control device fails, it can be switched in time to ensure the timeliness of fault discovery and improve the efficiency of the switching rate of the standby component. It can be understood that the module identification information can be configured to determine the faulty component, and the fault situation information is configured to characterize the fault cause of the component. For example, when the main sensing component fails, controlling the state information that can be obtained by control system can include the main sensing component fault (module identification information), communication line disconnection (fault condition information).

In practical applications, the control system can also be configured to obtain the working status of all components in the system. The working status can include failure and normal status. The standby sensing component can establish the environment model according to the environmental information collected by the first sensor assembly and/or the second sensor assembly around the vehicle, when the main sensing component fails and the main decision-making component is normal, and transmit the environment model to the main decision-making component, and the main decision-making component generates corresponding control command according to the distance of the obstacle.

In a specific embodiment, when it is detected that the main sensing component in the main control device is normal and the main prediction module in the main decision-making component is faulty, the standby prediction module can predict the trajectory of the obstacle in the environment information according to the environment model, and transmit the trajectory of the obstacle to the main planning module which is not faulty.

In a specific embodiment, when it is detected that the main planning module is faulty, the standby planning module can plan the current vehicle's traveling speed and traveling angle based on the obstacle's trajectory, and transmit the traveling speed and traveling angle to the normal main control module and/or the normal standby control module.

In a specific embodiment, when a failure of the main control module is detected, the standby control module can generate the control command according to the traveling speed and traveling angle and transmit the control command to the connected execution device.

It can be seen that, in the control system provided by the embodiment of this specification, when a component in the main control device fails, the standby component corresponding to the faulty component can be configured to complete the generation of control command without directly switching to the standby control device, ensuring the timeliness of data processing.

In order to know the working status of each module in the main decision-making component in a timely manner, the main prediction module can be connected with the standby prediction module, and the main prediction module and the standby prediction module can detect each other's working status; the main planning module and the standby planning module are connected, and the main planning module and the standby planning module detect each other's working status; the main control module and the standby control module are connected, and the main control module and the standby control module detect each other's working status.

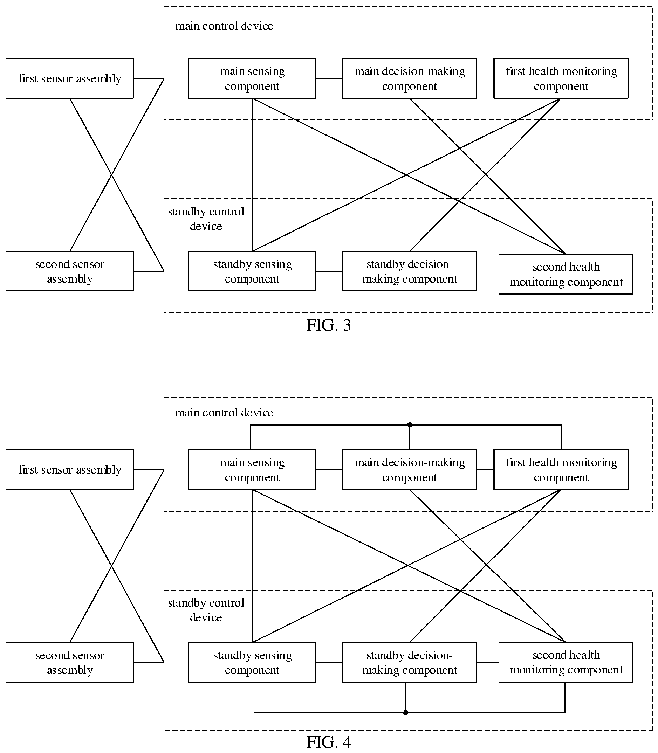

In an optional embodiment, FIG. 3 shows a schematic structural diagram of the other main control device and the other standby control device provided in this embodiment. Please refer to FIG. 3, the main control device includes a first health monitoring component, and the standby the control device includes a second health monitoring component;
the first health monitoring component is respectively connected with the standby sensing component and the standby decision-making component, and the first health monitoring component is configured to detect the working status of the standby sensing component and the standby decision-making component;
the second health monitoring component is respectively connected with the main sensing component and the main decision-making component, and the second health monitoring component is configured to detect the working status of the main sensing component and the main decision-making component.

Specifically, the control system can also detect the working status of each component in the system through the first health monitoring component and the second health monitoring component.

In practical applications, the standby sensing component and the standby decision-making component can send working status signals to the first health monitoring component in real time, and the main sensing component and main decision-making component can also send working status signals to the second health monitoring component in real time. The working status signal may carry module identification information and/or fault condition information.

In an optional embodiment, both the first health monitoring component and the second health monitoring component can be connected with the main sensing component, the main decision-making component, the standby sensing component and the standby decision-making component, the first health monitoring component and the second health monitoring component are all configured to detect the working status of the main sensing component, the main decision component, the standby sensing component and the standby decision-making component.

The embodiment of this specification uses the first health monitoring component and the second health monitoring component to monitor the working status of each component in real time, to ensure the timeliness and accuracy of the monitoring of the working status of each component, and to avoid unnecessary safety accidents caused by component failure.

In an optional embodiment, FIG. 4 shows a schematic structural diagram of another main control device and another standby control device provided in this embodiment, please refer to FIG. 4, the first health monitoring component and the second health monitoring component are also connected with the main prediction module, the main planning module, the main control module, the standby prediction module, the standby planning module and the standby control module; the first health monitoring component and the second health monitoring component are also configured to detect the working states of the main prediction module, the main planning module, the main control module, standby prediction module, standby planning module and standby control module.

In practical applications, the standby sensing component, the standby decision-making component, the main sensing component and the main decision-making component can send working status signals to the first health monitoring component and the second health monitoring component in real time. The working status signal may carry module identification information and/or fault condition information. The first health monitoring component and the second health monitoring component are configured to detect the working status of other components to ensure the accuracy of the detection and avoid the failure of a single detection component, which may cause dangerous accidents.

For example, when the main control device is normal, the standby control device will also generate and send the distance between the current vehicle and the obstacle to the main sensing component of the main control device, and the main control device will conduct multi-party perception fusion according to the distances between the current vehicle and the obstacle sent by the first sensor assembly and the standby sensing component of the standby control device, to form a redundant distance between the current vehicle and the obstacle, so as to ensure high reliability of perception.

When the control system or the standby control device detects that a component in the main control device is faulty, the standby control device replaces the component corresponding to the faulty component in the main control device (that is, partial replacement), such as the main sensing component in the main control device is faulty. Then, the standby sensing component in the standby control device will replace the main sensing module in the main control device to perform sensing fusion, and send the perceptual fusion information (the environment model) to the main decision-making component, which will carry out subsequent path planning and decision control according to the received perceptual fusion information, so as to ensure the normal operation of the autonomous driving system and driving safety.

Alternatively, when the control system or the standby control device detects the failure of any component or module in the main control device, the standby control device can be switched to the standby control device, and the standby control device can completely replace the main control device, perform perceptual fusion, path planning and decision control, etc., so as to ensure the normal operation of the autonomous driving system and driving safety.

In order to ensure higher safety, when monitoring the failure of the main control device or the standby control device, the control system can control the vehicle to stop in a safe state, or the control system can also issue a takeover prompt to the driver. If the driver is not monitored to take over the vehicle, the vehicle can be controlled to stop in a safe state.

It should be noted that parking in a safe state can be stopped in the original lane safety situation, or it can be changed in the case of safety and then parked by the roadside safety area.

The autonomous driving control system provided by the embodiment of this specification detects each other's working status and receives the environmental information sent by the connected sensor assemblies of the other through the main control device and the standby control device, thus ensuring that the environmental information collected by the first sensor assembly and the second sensor assembly can be standby and the accuracy of environmental information obtained. The main control device can also generate corresponding control commands according to the environmental information collected by the above two sensing assemblies, improve the accuracy of control command generation, avoid inaccurate control caused by environmental information collected by a single sensor assembly, and realize the functional safety and reliability of ASIL D level of autonomous driving.

In addition, when a component of the main control device is abnormal, the other main control devices can still generate control commands with the standby component of the standby control device, so as to avoid the situation that all components of all main control device need to switch to the standby control device when a component of the main control device fails, thus ensuring the timeliness and accuracy of standby. It further ensures the functional safety and reliability of ASIL D level of autonomous driving. In this paper, more adequate redundancy of the main control device and the standby control system can ensure that the system still has high reliability when the main control device or the standby control device fails, so as to ensure the normal operation of the autonomous driving mode without functional degradation and meet the high reliability requirements of high-level autonomous driving.

On the other hand, the embodiment of this specification provides a vehicle, the vehicle is provided with an autonomous driving system, the autonomous driving system includes the above-mentioned autonomous driving control system, and the system includes: a first sensor assembly, a second sensor assembly, a main control device, a standby control device and an execution device;

both the first sensor assembly and the second sensor assembly is configured to collect environmental information around a vehicle, and transmit collected environmental information to the main control device and the standby control device which are connected to the first sensor assembly and the second sensor assembly;

both the main control device and the standby control device are connected to the execution device, the main control device is connected to the standby control device, the main control device and the standby control device detect each other's working status, and the main control device is configured to generate a corresponding control command, and transmit a control command to the executive device, the control command is configured to control the vehicle;

the standby control device is configured to generate the corresponding control command according to a received environmental information and transmit the control command to the execution device when the working state of the main control device represents a failure.

It should be noted that each embodiment in this specification is described in a progressive manner, and each embodiment focuses on the differences with other embodiments, and the same and similar parts between embodiments can be referred to each other. The test method provided by the embodiments of the invention has the same realization principle and technical effect as the aforementioned system embodiments. For brief description, reference can be made to the relevant contents in the aforementioned system embodiments for the parts not mentioned in the embodiments of the method.

It should be understood that in the various embodiments herein, the sequence number of the above processes does not imply the order of execution, and the order of execution of each process shall be determined by its function and internal logic, and shall not constitute any limitation on the implementation process of the present embodiments.

It should also be understood that in the present embodiment, the term "and/or" is merely an association relation describing an associated object, indicating that there can be three kinds of relations. For example, A and/or B can be represented as: A exists alone, A and B exist simultaneously, and B exists alone. In addition, the character "/" in this paper generally means that the associated object is an "or" relationship.

A person of ordinary skill in the art may be aware that the units and algorithmic steps of each example described in conjunction with the embodiments disclosed herein can be implemented in electronic hardware, computer software, or a combination of the two. In order to clearly illustrate the interchangeability of hardware and software, the composition and steps of each example have been described generally in terms of function in the above notes. Whether these functions are performed in hardware or software depends on the specific application and design constraints of the technical solution. Technical professionals may use different methods to implement the described functionality for each particular application, but such implementation should not be considered beyond the scope of this article.

Technical personnel in the field can clearly understand that for the convenience and simplicity of description, the specific working process of the system, device and unit described above can refer to the corresponding process in the above-mentioned embodiments of the method, and will not be repeated here.

In the several embodiments presented herein, it should be understood that the disclosed systems, devices, and methods may be implemented in other ways. For example, the device embodiments described above are only schematic, for example, the division of units, only for a logical function division, the actual implementation can have another division, for example, multiple units or components can be combined or integrated into another system, or some features can be ignored, or not performed. In addition, the coupling or direct coupling or communication connection between each other shown or discussed may be indirect coupling or communication connection through some interface, device or unit, or may be electrical, mechanical or other form of connection.

The units described as separate parts may or may not be physically separate, and the parts shown as units may or may not be physical units, that is, they may be located in one place, or they may be distributed across multiple network units. Some or all of the units can be selected according to the actual needs to realize the purpose of the embodiment scheme in this paper.

In addition, the functional units in each embodiment of this paper may be integrated in a single processing unit, or each unit may exist physically separately, or two or more units may be integrated in a single unit. The integrated unit can be realized either in the form of hardware or in the form of software functional unit.

Integrated units, if implemented in the form of software functional units and marketed or used as stand-alone products, can be stored in a computer-readable storage medium. Based on this understanding, in this paper, the technical scheme of nature or the existing technology contribute to the part, or all or part of the technical scheme can be manifested in the form of a software product, the computer software products stored in a storage medium, including several commands to make a computer equipment (is a personal computer, server, Or network equipment, etc.) perform all or part of the steps of each embodiment of the method herein. The aforementioned storage media include: U disk, mobile hard disk, read-only Memory (ROM, Read Only Memory), Random Access memory (RAM, Random Access Memory), disk or disc and other media that can store program code.

In this paper, specific embodiments are used to explain the principle and embodiments of this paper. The above embodiments are only used to help understand the method and its core ideas. At the same time, for the general technical personnel in this field, according to the idea of this article, there will be changes in the specific implementation and scope of application, in summary, the content of this manual should not be understood as a limitation of this article.

## Claims

1. An autonomous driving control system, **characterized in that**, the system comprises: a first sensor assembly, a second sensor assembly, a main control device, a standby control device and an execution device;
both the first sensor assembly and the second sensor assembly is configured to collect environmental information around a vehicle, and transmit collected environmental information which are connected to the first sensor assembly and the second sensor assembly to the main control device and the standby control device ;
both the main control device and the standby control device are connected to the execution device, the main control device is connected to the standby control device, the main control device and the standby control device detect each other's working status, and the main control device is configured to generate a corresponding control command, and transmit a control command to the executive device, the control command is configured to control the vehicle;
the standby control device is configured to generate the corresponding control command according to a received environmental information and transmit the control command to the execution device when the working state of the main control device represents a failure.

2. The autonomous driving control system according to claim **1**, wherein the main control device comprises a main sensing component and a main decision-making component, the standby control device comprises a standby sensing component and a standby decision-making component;
the main sensing component is configured to establish an environment model according to the environment information;
the standby sensing component is configured to establish the environmental model based on the environmental information when the working state of the main sensing component represents a fault;
the main decision-making component is configured to generate the corresponding control command according to the environment model and transmit the control command to the execution device which is connected to the main decision-making component;
the standby decision-making component is configured to generate the corresponding control command according to the environment model and transmit the control command to the execution device which is connected to the standby decision-making component, when the working state of the main decision-making component represents a fault.

3. The autonomous driving control system according to claim **2**, wherein the main sensing component is connected to the standby sensing component, and the main sensing component and the standby sensing component detect each other's working status;
the main decision-making component and the standby decision-making component are connected, and the main decision-making component and the standby decision-making component detect each other's working status.

4. The autonomous driving control system according to claim **2**, wherein the main decision-making component comprises: a main prediction module, a main planning module and a main control module, and the standby decision-making component comprises: a standby prediction module, a standby planning module and a standby control module;
the main prediction module is configured to predict a trajectory of an obstacle in the environment information according to the environment model;
the standby prediction module is configured to predict the trajectory of the obstacle in the environment information according to the environment model when the main prediction module fails;
the standby planning module is configured to plan a traveling speed and a traveling angle of a current vehicle based on the trajectory of the obstacle when the main planning module fails, and transmit the traveling speed and traveling angle to the main control module and/or the standby control module;
the main planning module is configured to plan the traveling speed and traveling angle of the current vehicle based on the trajectory of the obstacle, and transmit the traveling speed and traveling angle to the main control module and/or the standby control module;
the main control module is configured to generate the control command according to the traveling speed and traveling angle and transmit the control command to the connected execution device;
the standby control module is configured to generate the control command according to the traveling speed and traveling angle and transmit the control command to the execution device when the main control module fails.

5. The autonomous driving control system according to claim **4**, wherein the main prediction module is connected to the standby prediction module, and the main prediction module and the standby prediction module detect each other's working status;
the main planning module is connected to the standby planning module, and the main planning module and the standby planning module detect each other's working status;
the main control module is connected to the standby control module, and the main control module and the standby control module detect each other's working status.

6. The autonomous driving control system according to claim **4**, wherein the main control device comprises a first health monitoring component, and the standby control device comprises a second health monitoring component;
the first health monitoring component is respectively connected with the standby sensing component and the standby decision-making component, and the first health monitoring component is configured to detect the working status of the standby sensing component and the standby decision-making component;
the second health monitoring component is respectively connected with the main sensing component and the main decision-making component, and the second health monitoring component is configured to detect the working status of the main sensing component and the main decision-making component.

7. The autonomous driving control system according to claim **6**, wherein the first health monitoring component is also connected to the standby prediction module, the standby planning module and the standby control module; the first health monitoring component is also configured to detect the working status of the standby prediction module, the standby planning module and the standby control module;
the second health monitoring component is also connected with the main prediction module, the main planning module and the main control module; the second health monitoring component is also configured to detect the working status of the main prediction module, the main planning module and the main control module.

8. The autonomous driving control system according to claim **4**, wherein the main control device comprises a first health monitoring component, and the standby control device comprises a second health monitoring component;
both the first health monitoring component and the second health monitoring component are connected to the main sensing component, the main decision-making component, the standby sensing component, and the standby decision-making component, and both the first health monitoring component and the second health monitoring component are configured to detect the working status of the main sensing component, the main decision-making component, the standby sensing component, and the standby decision-making component.

9. The autonomous driving control system according to claim **8**, wherein the first health monitoring component and the second health monitoring component are also connected to the main prediction module, the main planning module, the main control module, the standby prediction module, the standby planning module and the standby control module; the first health monitoring component and the second health monitoring component are also configured to detect the working status of the main prediction module, the main planning module, the main control module, the standby prediction module, the standby planning module and the standby control module.

10. A vehicle, the vehicle is provided with an autonomous driving system, and the autonomous driving system comprises the autonomous driving control system according to any one of claims **1-9**.
